# EUROPÄISCHE PATENTSCHRIFT

(11) **EP 3 268 172 B1**
(45) Veröffentlichungstag und Bekanntmachung des Hinweises auf die Patenterteilung: **24.04.2019**
(21) Anmeldenummer: 16710413.2
(22) Anmeldetag: 11.03.2016
(51) Int. Cl.: B25J 9/16

(54) **VERFAHREN ZUR STEUERUNG EINES MANIPULATORS ZUR AUSFÜHRUNG EINES ARBEITSPROZESSES**
METHOD FOR CONTROLLING A MANIPULATOR FOR CARRYING OUT A WORKING PROCESS
PROCÉDÉ DE COMMANDE D'UN MANIPULATEUR POUR LA MISE EN OEUVRE D'UN PROCESSUS DE TRAVAIL

(30) Priorität: 13.03.2015 DE 102015204599
(43) Veröffentlichungstag der Anmeldung: 17.01.2018
(73) Patentinhaber: KUKA Deutschland GmbH, 86165 Augsburg (DE)
(72) Erfinder: STIMMEL, Burkhard, 82547 Achmühle (DE)
(74) Vertreter: Mader, Joachim
(86) Internationale Anmeldenummer: PCT/EP2016/055257
(87) Internationale Veröffentlichungsnummer: WO 2016/146510

(56) Entgegenhaltungen:
- EP-A1- 2 243 585
- EP-A2- 2 656 980
- DE-A1-102009 007 181
- DE-A1-102009 056 325

## Beschreibung

### 1. Technischer Bereich

Die vorliegende Erfindung betrifft allgemein ein Verfahren zur Steuerung zumindest eines Manipulators zur Ausführung eines Arbeitsprozesses sowie ein Manipulatorsystem zur Durchführung eines derartigen Verfahrens.

### 2. Technischer Hintergrund

Manipulatoren, wie insbesondere Gelenkarmroboter, werden für verschiedene Arbeitsprozesse beispielsweise in der Montage oder Fertigung im industriellen Umfeld eingesetzt. Dabei wird der zumindest eine Manipulator entsprechend von einer Manipulatorsteuerung und der Arbeitsprozess bzw. Prozessablauf von einer Prozesssteuerung gesteuert.

Ein bekannter Ablauf eines Arbeitsprozesses ist beispielsweise das Anfahren einen Arbeitspunktes, der in einer Bahnplanung vorgegeben ist, durch einen Manipulator. Wenn der Arbeitspunkt erreicht ist, wird beispielsweise ein Programm für den Arbeitsprozess durch die Prozesssteuerung zum Ablauf gebracht und entsprechend vom Manipulator, bzw. einem am Manipulator befindlichen Endeffektor bzw. Werkzeug, ausgeführt.

Zu Beginn eines Arbeitsprozesses werden üblicherweise Prozessdaten für jeweilige zu bearbeitende Arbeitspunkte von einem Prozesstechniker in die Prozesssteuerung geladen bzw. eingegeben. Diese Prozessdaten umfassen insbesondere bewegungsrelevante Daten zur Steuerung des Arbeitsprozesses, die der Manipulatorsteuerung zur Verfügung gestellt werden, damit sich der Manipulator zur Ausführung des Arbeitsprozesses genau positionieren kann. Darüber hinaus umfasst die Prozesssteuerung bzw. die Prozessdaten Parameter für den jeweils gewünschten Arbeitsprozess, wie etwa die Schweißleistung, wenn ein Schweißprozess durchgeführt werden soll.

Die Druckschrift DE 10 2009 056 325 A1 beschreibt eine Schweißvorrichtung mit einem Manipulator, wobei eine Steuereinrichtung eingerichtet ist, eine erste Schweißkurve auf Grundlage von Kurvenpunkten zu bestimmen, und die Steuereinrichtung eingerichtet ist eine zweite Schweißkurve auf Grundlage der ersten Schweißkurve zu bestimmen. Wenn alle Schweißkurven ermittelt sind, werden die Schweißkurven in Steuerbefehle für den Manipulator und den Schweißlaser umgesetzt.

Die Druckschrift EP 2 656 980 A2 beschreibt ein Verfahren zum Vorgeben und/oder Steuern eines Manipulatorprozesses, wobei der Manipulatorprozess eine vorgegebene orientierte Manipulatorbahn aufweist und wenigstens eine Aktion in Abhängigkeit von einer zu der orientierten Manipulatorbahn gegensinnigen, ereignisinitiierten Rückwärtsbewegung ausgeführt wird.

Es sind aus internen Abläufen Verfahren bekannt, in denen von der Prozesssteuerung Prozessdaten für einen Arbeitspunkt an die Manipulatorsteuerung übertragen werden, nachdem der Manipulator den jeweiligen Arbeitspunkt angefahren hat. Das bedeutet, dass der Manipulator einen Arbeitspunkt anfährt und erst wenn er diesen erreicht hat, die Manipulatorsteuerung die Prozessdaten von der Prozesssteuerung abruft. Dies hat jedoch den Nachteil, dass der Manipulator einige Arbeitstakte untätig ist, da der Manipulator erst nach dem Erhalt der Prozessdaten z.B. in seine endgültige Position für den Arbeitsprozess fahren kann.

Dieses Verfahren hat zudem den Nachteil, dass es insbesondere im Falle von großen Prozessdatensätzen für Arbeitspunkte und nur kurzer Anfahrzeit zu einem nächsten Arbeitspunkt, die in der Montage oder Fertigung im industriellen Umfeld üblich ist, zu großen Taktzeitverlusten kommt. Außerdem stehen manche, insbesondere positionsrelevante Informationen aus der Prozesssteuerung nicht rechtzeitig zur Bahnplanung des Manipulators im Vorlauf für den nächsten anzufahrenden Punkt zur Verfügung.

Im Hinblick auf die oben erläuterten Verfahren ist es das Ziel der vorliegenden Erfindung, ein Verfahren und ein System bereitzustellen, das es ermöglicht, Taktzeit während der Ausführung eines Arbeitsprozesses einzusparen und damit den Arbeitsprozess insgesamt zu optimieren. Dabei wird des Weiteren auch eine verbesserte, synchronere Positionierung des Manipulators und insbesondere des daran befindlichen Werkzeugs gewährleistet.

Diese und weitere Aufgaben werden durch den Gegenstand der Hauptansprüche gelöst.

### 3. Inhalt der Erfindung

Die vorliegende Erfindung umfasst ein Verfahren zur Steuerung zumindest eines Manipulators zur Ausführung eines Arbeitsprozesses, der durch eine Prozesssteuerung gesteuert wird. Dabei handelt es sich vorzugsweise um einen Bahnprozess, also einen Arbeitsprozess, der nicht von einem stationären Manipulator ausgeführt wird. Der Bahnprozess umfasst einen oder mehrere Arbeitspunkte, die während der Ausführung des Arbeitsprozesses angefahren werden.

Das Verfahren weist zunächst den Schritt eines Bereitstellens eines oder mehrerer Arbeitspunkte, die vom Manipulator anzufahren sind, auf. Es handelt sich bei Arbeitspunkten um Punkte einer Bahnplanung, an denen der Manipulator tatsächlich einen Arbeitsprozess ausführt, wie etwa im Falle eines Punktschweißarbeitsprozesses um die einzelnen Schweißpunkte. Die Arbeitspunkte können auch die Ausführung des Arbeitsprozesses selbst umfassen, also im Falle eines kontinuierlichen Schweißprozesses auch das Schweißen. Im Falle des kontinuierlichen Schweißprozesses umfassen Arbeitspunkte etwa die Bahn, entlang derer tatsächlich ein Arbeitsprozess ausgeführt wird, wie beispielsweise das Bahnschweißen entlang einer Strecke. Alternativ kann der Arbeitspunkt lediglich den Beginn einer Bearbeitung bzw. einer Bahn, entlang derer tatsächlich ein Arbeitsprozess ausgeführt wird, umfassen. Der Manipulator kann in diesem Falle beispielsweise im Anschluss eine Bahn abfahren, in welcher er die Bearbeitung bzw. den Arbeitsprozess ausführt. Von Arbeitspunkten zu unterscheiden sind Bahnpunkte, die nur die Bewegung des Manipulators bestimmen und in denen kein Arbeitsprozess ausgeführt wird. Beispielsweise sind derartige Bahnpunkte Hilfspunkte im Raum, die verhindern sollen, dass der Manipulator mit Hindernissen zusammenstößt.

In einem weiteren Schritt wird ein Arbeitspunkt Aₙ durch den Manipulator angefahren. Dabei muss es sich nicht notwendigerweise um den ersten Arbeitspunkt der Bahnplanung handeln, sondern es kann jeder beliebige Arbeitspunkt sein, der in der Bahnplanung bzw. von der Prozesssteuerung zur Ausführung des Arbeitsprozesses vorgesehen ist. Das Anfahren umfasst hier sowohl das sich zu dem Arbeitspunkt Hinbewegen des Manipulators als auch das tatsächliche Erreichen des Arbeitspunktes durch das Werkzeug bzw. den Manipulator.

In einem weiteren Schritt wird geprüft, ob ein nächster Arbeitspunkt Aₙ₊₁ vorhanden ist. Vorzugsweise geschieht dies anhand der Bahnplanung. In einem weiteren Schritt werden, wenn ein nächster Arbeitspunkt Aₙ₊₁ vorhanden ist, ein oder mehrere Datensätze für diesen nächsten Arbeitspunkt Aₙ₊₁ abgerufen und zwar während der Ausführung des Arbeitsprozesses in dem Arbeitspunkt Aₙ. Auf diese Weise werden vorteilhaft Stillstandzeiten des Manipulators reduziert. Da die notwendigen Datensätze für den nächsten Arbeitspunkt Aₙ₊₁ frühzeitig vorliegen, und zwar bevor der Manipulator mit dem Anfahren des nächsten Arbeitspunktes begonnen hat, können die erhaltenen Datensätze in der Manipulatorsteuerung auch zur Optimierung der Bahnplanung zur Anfahrung des nächsten Arbeitspunktes verwendet werden.

Vorzugsweise werden der eine oder die mehreren Datensätze für den nächsten Arbeitspunkt Aₙ₊₁ durch die Manipulatorsteuerung abgerufen. Besonders bevorzugt werden der eine oder die mehreren Datensätze für den nächsten Arbeitspunkt Aₙ₊₁ aus der Prozesssteuerung abgerufen, die den Arbeitsprozess steuert und am meisten bevorzugt von der Manipulatorsteuerung aus der Prozesssteuerung abgerufen.

Ist beispielsweise ein nächster Arbeitspunkt Aₙ₊₁ vorhanden, wird vorzugsweise im Hintergrund des Arbeitsprozesses die Kommunikation von der Manipulatorsteuerung mit der Prozesssteuerung entweder per E/A-Signalen oder über XML-Strings aufgenommen oder andere bekannte Kommunikationsprotokolle. Die Datensätze für den nächsten Arbeitspunkt Aₙ₊₁ werden dann von der Manipulatorsteuerung aus der Prozesssteuerung abgerufen. Für eine solche Kommunikation ist es vorzugsweise notwendig, dass die Prozesssteuerung dazu eingerichtet ist, den Arbeitsprozess zu steuern und währenddessen gleichzeitig Daten zu kommunizieren.

Vorzugsweise wird der Schritt des Prüfens, ob ein weiterer Arbeitspunkt Aₙ₊₁ vorliegt, durchgeführt, während sich der Manipulator im Arbeitspunkt Aₙ befindet. Wie bereits oben erwähnt, kann darunter auch verstanden werden, dass sich der Manipulator in dem zugehörigen Arbeitsprozess befindet, bzw. in der zugehörigen Bahn des Arbeitsprozesses.
Die Prüfung findet also vorzugsweise statt, nachdem der Manipulator den Arbeitspunkt Aₙ erreicht hat.
Alternativ kann der Schritt des Prüfens auch bereits auf dem Weg zum Arbeitspunkt Aₙ ausgeführt werden bzw. auf dem Weg zum Arbeitspunkt gestartet werden und nach dem Erreichen des Arbeitspunkts Aₙ beendet werden. Durch die vorherige Prüfung auf einen nächsten Arbeitspunkt Aₙ₊₁ wird der Ablauf des Arbeitsprozesses optimiert, da im Falle des Nicht-Vorhandenseins eines nächsten Arbeitspunkt Aₙ₊₁ keine Datensätze abgerufen werden.

Vorzugsweise weist das Verfahren weiterhin einen Schritt des Anwendens der abgerufenen Datensätze aus dem Schritt des Abrufens auf eine Bahnplanung zum Anfahren des nächsten Arbeitspunkts Aₙ₊₁ durch die Manipulatorsteuerung auf. Vorteilhafterweise wird damit ein optimierter Ablauf des Arbeitsprozesses ermöglicht, da der Manipulatorsteuerung die für die Bahn- bzw. Bewegungsplanung des Manipulators entscheidenden Informationen bzw. Datensätze zu einem frühen Zeitpunkt, nämlich vor Erreichen des nächsten Arbeitspunkts Aₙ₊₁, vorliegen. Das Anfahren an den nächsten Arbeitspunkt Aₙ₊₁ kann somit unter Umständen optimiert werden, sofern die abgerufenen Datensätze eine Änderung oder Optimierung der Bahnplanung erforderlich machen bzw. erlauben.

Weiterhin werden vorzugsweise Ist-Daten des Arbeitspunktes Aₙ und/oder Ist-Daten des Manipulators in dem Arbeitspunkt Aₙ von der Manipulatorsteuerung an die Prozesssteuerung, die den Arbeitsprozess steuert, gesendet und zwar während sich der Manipulator im Arbeitspunkt Aₙ befindet. Diese gesendeten Ist-Daten werden dann auf die Prozesssteuerung angewendet bzw. von dieser verarbeitet. Mit der Übertragung von Ist-Daten des Arbeitspunkts Aₙ an die Prozesssteuerung als Kommunikation zwischen Manipulatorsteuerung und Prozesssteuerung wird der Arbeitsprozess weiter verbessert, da die Prozesssteuerung mit den Ist-Daten beispielsweise eine Anpassung ihrer Prozessplanung vornehmen kann. Diese bidirektionale Kommunikation führt dazu, dass es einem Bediener der Prozesssteuerung ermöglicht wird, auf Daten der Manipulatorsteuerung bzw. Veränderungen im Ist-Arbeitsprozess zu reagieren, ohne dass vertiefte Kenntnisse von der Manipulatorsteuerung und ihren Daten erforderlich sind.

Vorzugsweise umfassen die Ist-Daten zumindest die Position, Lage, Status und/oder die Stellung des einen oder der mehreren Manipulatoren und/oder des Endeffektors, die insbesondere von der Manipulatorsteuerung erfasst bzw. gemessen werden. Diese Aufzählung für Ist-Daten ist nicht abschließend, sondern lediglich eine beispielhafte Aufzählung. Die Ist-Daten können weiter andere zur Bearbeitung und Manipulatorsteuerung bekannten und verwendeten Daten/Parameter bzw. Informationen umfassen.

Im Falle des Punktschweißprozesses kann beispielsweise die Elektrodenkappenlänge der Schweißelektrode in den Ist-Daten umfasst sein, die von der Manipulatorsteuerung an die Prozesssteuerung gesendet werden. Die Berücksichtigung der Elektrodenkappenlänge ist insbesondere für den Arbeitsprozess in dem nächsten Arbeitspunkt Aₙ₊₁ und die damit verbundene Bahnplanung des Manipulators von Bedeutung.

Vorzugsweise werden weiterhin vor dem Schritt des Anfahrens des Arbeitspunktes Aₙ ein oder mehrere Datensätze für den Arbeitsprozess in der Prozesssteuerung, vorzugsweise für jeden Arbeitspunkt, gespeichert.

Vorzugsweise wird weiterhin die Prozesssteuerung in einem Host-PC implementiert und die Manipulatorsteuerung über den Host-PC angesteuert. Dies ermöglicht es, wie oben beschrieben, dass der Bediener keine vertieften Kenntnisse von der Manipulatorsteuerung haben muss, da die Kommunikation zwischen Prozesssteuerung und Manipulatorsteuerung weitestgehend automatisch abläuft.

Der Arbeitsprozess ist vorzugsweise eines der folgenden: Clinchen, Durchsetzfügen, Fügeprozesse allgemein, Widerstandspunktschweißen, Durchsetznieten oder Nieten allgemein. Weiterhin kann der Arbeitsprozess jeden Prozess umfassen, der mit Manipulatoren durchgeführt werden kann, beispielsweise verschiedene Arten des Schweißens, Aufbringprozesse (z.B. vor einem Klebeprozess), Vermessungen/Messprozesse usw.

Die vorliegende Erfindung umfasst weiterhin ein Manipulatorsystem, das zumindest einen Manipulator, eine Prozesssteuerung und eine Manipulatorsteuerung umfasst. Das System ist dabei dazu eingerichtet das oben genannte erfindungsgemäße Verfahren auszuführen.

### 4. Ausführungsbeispiel

Im Folgenden wird die vorliegende Erfindung anhand der beiliegenden Figuren näher beschrieben. Es zeigt:
- Fig. 1: ein schematisches Ablaufdiagramm für ein erfindungsgemäßes Verfahren, und
- Fig. 2: schematisch ein Manipulatorsystem zur Durchführung des Verfahrens.

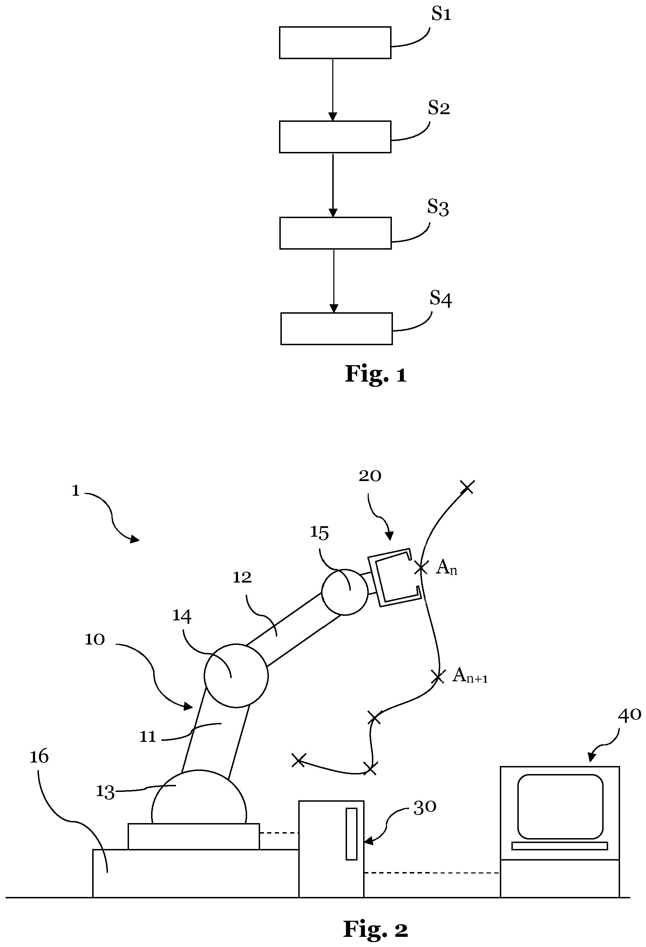

Wie in Figur 1 gezeigt, werden in einem ersten Schritt S1 mehrere Arbeitspunkte bereitgestellt, die von einem Manipulator anzufahren sind. Diese werden vorzugsweise einer Prozesssteuerung bereitgestellt, die auf einem Host-PC eingerichtet ist. Die Prozesssteuerung ist in Kommunikation mit der Manipulatorsteuerung des Manipulators eingerichtet, die üblicherweise ein von der Prozesssteuerung getrenntes, proprietäres System des Manipulatorherstellers ist. Die Arbeitspunkte sind beispielsweise bestimmte Raumkoordinaten, an denen der Manipulator bestimmte Arbeitsprozesse durchführen soll, wie z.B. das Setzen eines Schweißpunktes. Bei Schritt S2 fährt der Manipulator einen Arbeitspunkt Aₙ an. Hierzu hat die Manipulatorsteuerung z.B. von der Prozesssteuerung die Raumkoordinaten der Arbeitspunkte erhalten und vorab eine bestimmte Bahnplanung berechnet, die der Manipulator selbsttätig abfährt. Bei Schritt S3 prüft die Manipulatorsteuerung, ob nach dem Arbeitspunkt Aₙ ein nächster Arbeitspunkt Aₙ₊₁ vorliegt. Falls nicht, ist der Arbeitsprozess abgeschlossen. Die Prüfung kann beispielsweise erfolgen, während der Manipulator den Arbeitspunkt Aₙ anfährt, also auf dem Weg zu diesem Arbeitspunkt Aₙ ist. Die Prüfung kann aber auch erst dann erfolgen, wenn der Manipulator das Anfahren beendet hat, also am Arbeitspunkt Aₙ angekommen ist.

Wenn bei der Prüfung festgestellt wird, dass ein nächster Arbeitspunkt Aₙ₊₁ vorliegt, so ruft bei Schritt S4 die Manipulatorsteuerung von der Prozesssteuerung Datensätze für den nächsten Arbeitsprozess ab, und zwar bevor der Manipulator den Arbeitspunkt Aₙ verlassen hat. Das Abrufen der Datensätze für den nächsten Arbeitsprozess Aₙ₊₁ erfolgt also noch während der Ausführung des Arbeitsprozesses im Arbeitspunkt Aₙ.

In Figur 2 ist schematisch ein Manipulatorsystem 1 dargestellt, welches einen Manipulator 10, eine Manipulatorsteuerung 30 und eine Prozesssteuerung 40 umfasst. Der Manipulator 10 ist vorzugsweise ein mehrachsiger Gelenkarmroboter, der eine Anzahl von Gliedern 11, 12 umfasst, die über Drehgelenke 13, 14 und 15 miteinander verbunden sind. Der Manipulator 10 ist auf einem Sockel 16 befestigt. An seinem Handflansch ist der Manipulator 10 mit einem Effektor 20 versehen, der im abgebildeten Beispiel eine Schweißzange zum Punktschweißen sein soll. Die Manipulatorsteuerung 30 ist in einem eigenen Gehäuse untergebracht und läuft beispielsweise auf einem eigenen Micro-PC oder Ähnlichem. Auch die Prozesssteuerung 40 läuft auf einem eigenen PC und sendet Befehle an die Manipulatorsteuerung 30, um den Arbeitsprozess des Manipulators 10 zu steuern. Wie bekannt, setzt die Manipulatorsteuerung 30 Befehle der Prozessteuerung 40 um. Wenn die Prozesssteuerung 40 bspw. vorgibt, dass der Manipulator 10 (bzw. der Effektor 20) eine bestimmte Raumkoordinate anfahren soll, so berechnet die Manipulatorsteuerung 30 die Bahnplanung, also den Bewegungsweg den der Manipulator durchführt, um die vorgegebene Raumkoordinate zu erreichen.

In Figur 2 sind eine Reihe von Kreuzen gezeigt, die verschiedene Arbeitspunkte andeuten sollen, die der Manipulator 10 bzw. der Effektor 20 anfahren soll. Die Kurve soll dabei die Bahnplanung andeuten, die die Manipulatorsteuerung 30 berechnet hat, damit der Manipulator 10, möglichst ohne große Umwege, alle vorgegebenen Arbeitspunkte anfährt. Die Arbeitspunkte selbst werden von der Prozesssteuerung vorgegeben bzw. gesetzt. In jedem Arbeitspunkt muss der Effektor 20 in eine bestimmte Pose ausgerichtet werden und dann mit einer vorgegebenen Schweißleistung (Stromrampensteigung, Schweißdauer, evtl. Kühlphasen etc.) einen Schweißpunkt setzen. Auch diese Prozessdaten werden der Manipulatorsteuerung 30 von der Prozesssteuerung 40 bereitgestellt. Je nach Arbeitsprozess kann es dabei dazu kommen, dass sich bestimmte Parameter verändern, so kann sich beispielsweise die Elektrodenkappenlänge ändern, was von der Manipulatorsteuerung 30 regelmäßig erfasst wird, indem die beiden Kappen der Elektroden zusammengeführt werden und der Stromanstieg gemessen wird. Hieraus kann dann die Längenänderung berechnet werden.

Im gezeigten Beispiel befindet sich der Manipulator 10 bzw. der Effektor 20 an einem Arbeitspunkt Aₙ, d.h. der Manipulator hat den Arbeitspunkt Aₙ vollständig angefahren. In dieser gezeigten Position soll ein erster Schweißpunkt gesetzt werden. Während der Manipulator 10 den entsprechenden Schweißvorgang durchführt, überprüft die Manipulatorsteuerung 30 ob ein nächster Arbeitspunkt Aₙ₊₁ vorgesehen ist. Fall dies der Fall ist, fragt die Manipulatorsteuerung 30 bei der Prozesssteuerung 40 die benötigten Datensätze (z.B. Stromrampensteigung, Schweißdauer, evtl. Kühlphasen etc.) für den nächsten Arbeitspunkt Aₙ₊₁ an. Diese Datensätze werden dann vorzugsweise von der Manipulatorsteuerung 30 bei einer Neuberechnung der Bahnplanung zum Anfahren des nächsten Arbeitspunktes Aₙ₊₁ berücksichtigt. Weiter vorzugsweise sendet die Manipulatorsteuerung 30 während der Manipulator 10 am Arbeitspunkt Aₙ arbeitet, Ist-Daten des Arbeitspunktes Aₙ an die Prozesssteuerung 40. Diese Ist-Daten können bspw. die Ist-Schweißkraft betreffen, die Blechdickentoleranz (es wird z.B. durch die Schweißzange in jedem Punkt festgestellt wie dick das Blech ist und daraus eine Toleranz berechnet) und andere wichtige Parameter. Diese Ist-Daten können von der Prozesssteuerung 40 verwendet werden, um z.B. die folgenden Arbeitsprozesse anzupassen bzw. zu optimieren.

### Bezugszeichenliste:

- S1 bis S4: Verfahrensschritte
- 1: Manipulatorsystem
- 10: Manipulator
- 11, 12: Glieder
- 13, 14, 15: Gelenke
- 16: Sockel
- 20: Effektor
- 30: Manipulatorsteuerung
- 40: Prozesssteuerung

## Patentansprüche

1. Verfahren zur Steuerung zumindest eines Manipulators (10) zur Ausführung eines Arbeitsprozesses, der durch eine Prozesssteuerung (40) gesteuert wird, wobei das Verfahren folgende Schritte aufweist:
a) Bereitstellen eines oder mehrerer Arbeitspunkte, die vom Manipulator (10) anzufahren sind;
b) Anfahren eines Arbeitspunktes Aₙ durch den Manipulator (10);
c) Prüfen, ob ein nächster Arbeitspunkt Aₙ₊₁ vorhanden ist;
d) Wenn ein nächster Arbeitspunkt Aₙ₊₁ vorhanden ist, Abrufen eines oder mehrerer Datensätze für den nächsten Arbeitspunkt Aₙ₊₁ während der Ausführung des Arbeitsprozesses in dem Arbeitspunkt Aₙ.

2. Verfahren nach Anspruch 1, wobei der eine oder die mehreren Datensätze in Schritt d) durch die Manipulatorsteuerung (30) abgerufen werden.

3. Verfahren nach einem der vorhergehenden Ansprüche, wobei der eine oder die mehreren Datensätze in Schritt d) aus der Prozesssteuerung (40) abgerufen werden, die den Arbeitsprozess steuert.

4. Verfahren nach einem der vorhergehenden Ansprüche, wobei das Prüfen in Schritt c) durchgeführt wird, während sich der Manipulator (10) im Arbeitspunkt Aₙ befindet.

5. Verfahren nach einem der vorhergehenden Ansprüche, weiterhin aufweisend den folgenden Schritt:
Anwenden der abgerufenen Datensätze aus Schritt d) auf eine Bahnplanung zum Anfahren des nächsten Arbeitspunkts Aₙ₊₁ durch die Manipulatorsteuerung (30).

6. Verfahren nach einem der vorhergehenden Ansprüche, weiterhin aufweisend den folgenden Schritt:
Senden von Ist-Daten des Arbeitspunktes Aₙ und/oder Ist-Daten des Manipulators in dem Arbeitspunkt Aₙ von der Manipulatorsteuerung (30) an die Prozesssteuerung (40), die den Arbeitsprozess steuert, während sich der Manipulator (10) im Arbeitspunkt Aₙ befindet, und
Anwenden der gesendeten Ist-Daten auf die Prozesssteuerung (40).

7. Verfahren nach Anspruch 6, wobei die Ist-Daten zumindest umfassen: Position, Lage, Status, Stellung des einen oder der mehreren Manipulatoren, Endeffektorposition.

8. Verfahren nach einem der vorhergehenden Ansprüche, weiterhin aufweisend den folgenden Schritt vor Schritt b):
Speichern für jeden Arbeitspunkt eines oder mehrerer Datensätze für den Arbeitsprozess in der Prozesssteuerung (40), die den Arbeitsprozess steuert.

9. Verfahren nach einem der vorhergehenden Ansprüche, weiterhin aufweisend den folgenden Schritt:
Implementieren der Prozesssteuerung (40) in einem Host-PC; und Ansteuern der Manipulatorsteuerung (30) über den Host-PC.

10. Verfahren nach einem der vorhergehenden Ansprüche, wobei der Arbeitsprozess eines der folgenden ist: Clinchen, Durchsetzfügen, Fügeprozesse allgemein, Widerstandspunktschweißen, Durchsetznieten, Nieten allgemein.

11. Manipulatorsystem (1) umfassend zumindest einen Manipulator (10), eine Prozesssteuerung (30) und eine Manipulatorsteuerung (40), wobei das System eingerichtet ist ein Verfahren gemäß einem der vorhergehenden Ansprüche auszuführen.

## Claims

1. A method for controlling at least one manipulator (10) for carrying out a working process, which is controlled by a process controller (40), wherein the method comprises following steps:
a) providing one or more working points, which have to be approached by the manipulator (10);
b) approaching a working point Aₙ by the manipulator (10);
c) checking, whether a subsequent working point Aₙ₊₁ is present; and
d) if a subsequent working point Aₙ₊₁ is present, retrieving one or more data sets for the subsequent working point Aₙ₊₁, while the working process is being carried out at the working point Aₙ.

2. The method of claim 1, wherein the one or more data sets are retrieved at step d) by the manipulator controller (30).

3. The method of any of the preceding claims, wherein the one or more data sets are retrieved at step d) from the process controller (40), which controls the working process.

4. The method of any of the preceding claims, wherein the checking at step c) is carried out, while the manipulator is at working point Aₙ.

5. The method of any of the preceding claims, further comprising the following step: applying, by the manipulator controller (30), of the retrieved data sets from step d) on a path planning for approaching the subsequent working point Aₙ₊₁.

6. The method of any of the preceding claims, further comprising the steps of: sending actual data of working point Aₙ and/or actual data of the manipulator at working point Aₙ by the manipulator controller (30) to the process controller (40), which controls the working process, while the manipulator (10) is at working point Aₙ, and
applying the sent actual data to the process controller (40).

7. The method of claim 6, wherein the actual data at least comprise: position, arrangement, status, location of the one or more manipulators, end effector position.

8. The method of any of the preceding claims, further comprising the following step before step b):
storing, for each working point, one or more data sets for the working process in the process controller (40), which controls the working process.

9. The method of any of the preceding claims, further comprising the steps of:
implementing the process controller (40) in a host PC; and
controlling the manipulator controller (30) through the host PC.

10. The method of any of the preceding claims, wherein the working process is selected from the group consisting of clinching, pass-through joining, joining processes in general, resistance spot welding, pass-through riveting and riveting processes in general.

11. A manipulator system (1), comprising:
at least one manipulator (10);
a process controller (30); and
a manipulator controller (40),
wherein the system is configured to carry out the method of any of the preceding claims.

## Revendications

1. Procédé de commande d'au moins un manipulateur (10) pour exécuter un processus de travail qui est commandé par une commande de processus (40), le procédé comprenant les étapes suivantes :
a) fourniture d'un ou plusieurs points de travail qui doivent être ralliés par le manipulateur (10) ;
b) ralliement d'un point de travail Aₙ par le manipulateur (10) ;
c) vérification qu'un point de travail suivant Aₙ₊₁ existe ;
d) si un point de travail suivant Aₙ₊₁ existe, appel d'un ou plusieurs ensembles de données pour le point de travail suivant Aₙ₊₁ pendant l'exécution du processus de travail au point de travail Aₙ.

2. Procédé selon la revendication 1, le un ou les plusieurs ensembles de données étant appelés à l'étape d) par la commande de manipulateur (30).

3. Procédé selon une des revendications précédentes, le un ou les plusieurs ensembles de données étant appelés à l'étape d) à partir de la commande de processus (40) qui commande le processus de travail.

4. Procédé selon une des revendications précédentes, la vérification à l'étape c) étant réalisée pendant que le manipulateur (10) se trouve au point de travail Aₙ.

5. Procédé selon une des revendications précédentes, comprenant en outre l'étape suivante :
application des ensembles de données appelés à l'étape d) à une planification de trajectoire pour rallier le point de travail suivant Aₙ₊₁ par la commande de manipulateur (30).

6. Procédé selon une des revendications précédentes, comprenant en outre l'étape suivante :
envoi de données réelles du point de travail Aₙ et/ou de données réelles du manipulateur au point de travail Aₙ par la commande de manipulateur (30) à la commande de processus (40) qui commande le processus de travail pendant que le manipulateur (10) se trouve au point de travail Aₙ et
application à la commande de processus (40) des données réelles envoyées.

7. Procédé selon la revendication 6, les données réelles comprenant au moins : position, orientation, état, position de l'un ou des plusieurs manipulateurs, position de l'effecteur terminal.

8. Procédé selon une des revendications précédentes, comprenant en outre l'étape suivante avant l'étape b) :
mémorisation, pour chaque point de travail, d'un ou de plusieurs ensembles de données pour le processus de travail dans la commande de processus (40) qui commande le processus de travail.

9. Procédé selon une des revendications précédentes, comprenant en outre l'étape suivante :
mise en oeuvre de la commande de processus (40) dans un PC hôte ; et action sur la commande de manipulateur (30) par l'intermédiaire du PC hôte.

10. Procédé selon une des revendications précédentes, le processus de travail étant l'un des suivants : clinchage, assemblage à joints traversants, procédés d'assemblage en général, soudage par résistance par points, rivetage traversant, rivetage en général.

11. Système manipulateur (1) comprenant au moins un manipulateur (10), une commande de processus (30) et une commande de manipulateur (40), le système étant agencé pour exécuter un procédé selon une des revendications précédentes.
